# EUROPÄISCHE PATENTANMELDUNG

(11) **EP 1 225 740 A2**
(43) Veröffentlichungstag der Anmeldung: **24.07.2002**
(21) Anmeldenummer: 02100044.3
(22) Anmeldetag: 21.01.2002
(51) Int. Cl.: H04L 27/06

(54) **Schaltungsanordnung**

(30) Priorität: 23.01.2001 DE 10102863
(71) Anmelder: Philips Corporate Intellectual Property GmbH, 52066 Aachen (DE); Koninklijke Philips Electronics N.V., 5621 BA Eindhoven (NL)
(72) Erfinder: Thiel, Holger, 52066, Aachen (DE); Tobergte, Wolfgang, 52066, Aachen (DE); Liebig, Michael, Aachen, 52066 (DE)
(74) Vertreter: Volmer, Georg, Dipl.-Ing.

(57) **Zusammenfassung**

Schaltungsanordnung zum Ansteuern eines ersten Anschlusses und eines zweiten Anschlusses einer kontaktlosen integrierten Schaltung, insbesondere zum Testen einer CMOS-Schaltung.
Die Schaltungsanordnung weist eine Steuerstufe, eine erste Treiberstufe und eine zur ersten Treiberstufe komplementär ausgebildete zweite Treiberstufe auf. Hierbei fungieren die erste Treiberstufe und die zweite Treiberstufe als eine Brückenstufe, die eine symmetrische Einspeisung über den ersten Anschluss und den zweiten Anschluss der integrierten Schaltung vornimmt.
Die Amplitudenmodulation erfolgt über die Umschaltung der jeweiligen Versorgungspannung der beiden Treiberstufen.

## Beschreibung

Die Erfindung betrifft eine Schaltungsanordnung zum Ansteuern eines ersten Anschlusses und eines zweiten Anschlusses einer vorzugsweise kontaktlosen integrierten Schaltung, insbesondere zum Testen einer CMOS-Schaltung.

Bei einer Vielzahl von heutzutage eingesetzten integrierten Schaltungen erfolgt die Übertragung von Daten von der integrierten Schaltung und zur integrierten Schaltung sowie die Übertragung von Energie zur integrierten Schaltung auf kontaktlose Art und Weise, so beispielsweise mittels Mikrowellen, mittels Lichtwellen, mittels kapazitiver Kopplung oder auch mittels induktiver Kopplung. Im letzteren Falle ist die integrierte Schaltung über mindestens eine Spule ansteuedbar, die über einen ersten Anschluss und einen zweiten Anschluss mit der integrierten Schaltung in Verbindung steht.

In diesem Zusammenhang besteht, insbesondere nach der Herstellung der möglicherweise noch auf der Platte oder Scheibe ("wafer") des Trägersubstrats aus halbleitendem oder isolierendem Material angeordneten integrierten Schaltung, die Notwendigkeit, diese integrierte Schaltung "kontaktbehaftet" über den ersten und zweiten Anschluss, das heißt über die Spulenschnittstellen separat anzusteuern, beispielsweise um die integrierte Schaltung einem Prüf- und Testverfahren zu unterziehen. Hierzu wird die integrierte Schaltung über die Spulenschnittstellen mit einer Wechselspannung versorgt; gleichzeitig findet ein bidirektionaler Datenaustausch statt.

Soll nun eine integrierte Schaltung Konventionellerweise getestet werden, so ist üblicherweise eine Testanordnung mit zwei Testerausgängen und einem Modulationsausgang vorgesehen; hierbei erzeugen die beiden Testerausgänge gegenphasige Trägertakte, die über intern den jeweiligen Testerausgängen vorgeschaltete Widerstände an den ersten und zweiten Anschluss der integrierten Schaltung angeschlossen sind. Ist die Spannung am Modulationsausgang höher als die Spannung an den Testerausgängen, so sperren zwischen die Testerausgänge und den Modulationsausgang geschaltete Dioden, und die Trägeramplitude ist gleich der Spannung an den beiden Testerausgängen. Durch Absenken der Spannung am Modulationsausgang werden die beiden Testerausgänge belastet, und die Trägeramplitude wird abgesenkt. Der Modulationsindex kann hierbei über die Spannung am Modulationsausgang eingestellt werden.

Für einen simultanen Mehrfachtest ist die Modulation bei dieser konventionellen Testanordnung für jede einzelne integrierte Schaltung separat aufzubauen; dies bedeutet mit anderen Worten, dass jeweils drei Kanäle - entsprechend den zwei Testerausgängen und dem Modulationsausgang - der konventionellen Testanordnung zum Modulieren der integrierten Schaltung erforderlich sind. Da für jede integrierte Schaltung zusätzlich ein weiterer Test-Pin-Kanal benötigt wird, kann eine Testanordnung mit beispielsweise 64 Kanälen parallel maximal sechzehn integrierte Schaltungen testen.

Eine Schaltungsanordnung zur ASK-Demodulation (ASK = amplitude shift keying = Amplitudenaustastung; Kodier- und Modulationsverfahren mit Amplitudenverschiebung) ist durch die Druckschrift EP 0 949 786 A1 bekannt. Dort ist eine Schaltungsanordnung zur Demodulation einer durch Wechsel der Amplituden zwischen einem niedrigen und einem hohen Pegel (ASK-)modulierten Spannung insbesondere für eine Chipkarte, beschrieben, die einen Bandpassfilter zur Unterdrückung von im Vergleich zur Modulationsfrequenz niederfrequenten Störungen, zur Unterdrückung der Trägerfrequenz und zur Erzeugung jeweils eines Impulses bei einem Wechsel der Amplituden zwischen dem niedrigen Pegel und dem hohen Pegel sowie einen Schwellwertschalter aufwast, mit dem durch Beaufschlagung mit den Impulsen und Umschaltung zwischen zwei Zuständen die demodulierte Spannung erzeugt wird.

Gemeinsam ist den vorstehend beschriebenen konventionellen Schaltungsanordnungen, dass an den Testerausgängen Ausgleichsströme auftreten, wodurch die Schaltungsanordnungen aufwendig und kompliziert werden. Auch sind die vorstehend beschriebenen konventionellen Schaltungsanordnungen für einen simultanen Mehrfachtest nur bedingt geeignet, weil für jede integrierte Schaltung eine relativ hohe Anzahl an Kanälen der Schaltungsanordnung erforderlich ist.

Der Erfindung liegt die Aufgabe zugrunde, eine Schaltungsanordnung der eingangs genannten Art bereitzustellen, mit der bei kostengünstiger Struktur eine Vielzahl integrierter Schaltungen gleichzeitig getestet werden kann; des weiteren soll durch die vorliegende Erfindung eine Schaltungsanordnung für eine der integrierten Schaltung zugeordnete einfache Schreib-/Leseeinheit bereitgestellt werden können.

Diese Aufgabe wird durch die im Anspruch 1 angegebenen Merkmale gelöst. Vorteilhafte Ausgestaltungen und zweckmäßige Weiterbildungen der vorliegenden Erfindung sind in den Unteransprüchen gekennzeichnet.

Gemäß der Lehre der vorliegenden Erfindung weist die Schaltungsanordnung mindestens eine Steuerstufe, mindestens eine erste Treiberstufe und mindestens eine zur ersten Treiberstufe zweckmäßigerweise komplementär ausgebildete zweite Treiberstufe auf. Hierbei fungieren die erste Treiberstufe und die zweite Treiberstufe gewissermaßen als eine Brückenstufe, die eine symmetrische Einspeisung über den ersten Anschluss und den zweiten Anschluss der integrierten Schaltung vornimmt, wobei die erste Treiberstufe mit dem ersten Anschluss der integrierten Schaltung und die zweite Treiberstufe mit dem zweiten Anschluss der integrierten Schaltung verbunden ist - oder auch umgekehrt.

Die Amplitudenmodulation erfolgt über die Umschaltung der jeweiligen Versorgungsspannung der beiden Treiberstufen, wobei die Versorgungsspannungen der beiden Treiberstufen gemäß der Lehre der vorliegenden Erfindung zu unterschiedlichen Zeitpunkten umgeschaltet werden. Hierzu werden die beiden Treiberstufen mit zueinander invertierten, aber symmetrischen Taktsignalen beaufschlagt, so dass am Ausgang der Treiberstufen jeweils zwei gleichlange Taktphasen [a] und [b] entstehen: In Taktphase [a] ist die jeweilige Versorgungsspannung mit dem Ausgang der jeweiligen Treiberstufe verbunden, in Taktphase [b] ist das jeweilige Referenzpotential mit dem Ausgang der jeweiligen Treiberstufe verbunden.

Die vorstehend erwähnte Umschaltung der jeweiligen Versorgungsspannung der beiden Treiberstufen erfolgt gemäß der Lehre der vorliegenden Erfindung in Taktphase [b], in der die jeweilige Vesorgungsspannung nicht mit dem Ausgang der jeweiligen Treiberstufe verbunden ist. Da die beiden Treiberstufen mit zueinander invertiertem Takt arbeiten, ist der jeweilige Zeitpunkt der Umschaltung für die beiden Treiberstufen unterschiedlich.

In bezug auf die vorliegende Erfindung wird der Fachmann insbesondere zu schätzen wissen, dass die Schaltungsanordnung - obgleich von relativ einfacher Struktur - für eine Datenübertragung mittels ASK-Modulation (ASK = amplitude shift keying = Amplitudenaustastung; Kodier- und Modulationsverfahren mit Amplitudenverschiebung), beispielsvseise zum Testen einer integrierten Schaltung oder für eine einer integrierten Schaltung zugeordnete Schreib-/Leseeinheit, ausgelegt ist.

Hierbei ermöglicht - im Gegensatz etwa zur in der Druckschrift EP 0 949 786 A1 offenbarten Schaltungsanordnung aus dem Stand der Technik - ein variabler Modulationsgrad mit einstellbaren Pulsabständen und mit einstellbaren Pulsbreiten ein Ansprechen aller Empfangs/Sendeparameter der integrierten Schaltung, und zwar auch mittels einer Standardtestanordnung insbesondere bei Einsatz einer derartigen Standardtestanordnung ist mit der Schaltungsanordnung gemäß der vorliegenden Erfindung, die in diesem Falle als Brückenschaltung oder Brückenstufe fungiert, im Vergleich zu konventionellen Schaltungsanordnungen in etwa eine Halbierung der Testzeit erzielbar.

Die Erfindung betrifft auch eine vorzugsweise kontaktlose integrierte Schaltung, insbesondere CMOS-Schaltung, angesteuert, insbesondere getestet durch mindestens eine Schaltungsanordnung der vorstehend beschriebenen Art.

Ein Ausführungsbeispiel der vorliegenden Erfindung wird nachstehend anhand der Zeichnungen näher erläutert. Es zeigt:
- Fig. 1: ein Ausführungsbeispiel einer Schaltungsanordnung gemäß der vorliegenden Erfindung, in schematischer Prinzipdarstellung; und
- Fig. 2: ein Diagramm, in dem der zeitliche Spannungsverlauf in der ersten Treiberstufe und am Ausgang der ersten Treiberstufe mit dem zeitlichen Spannungsverlauf in der zweiten Treiberstufe und am Ausgang der zweiten Treiberstufe verglichen ist.

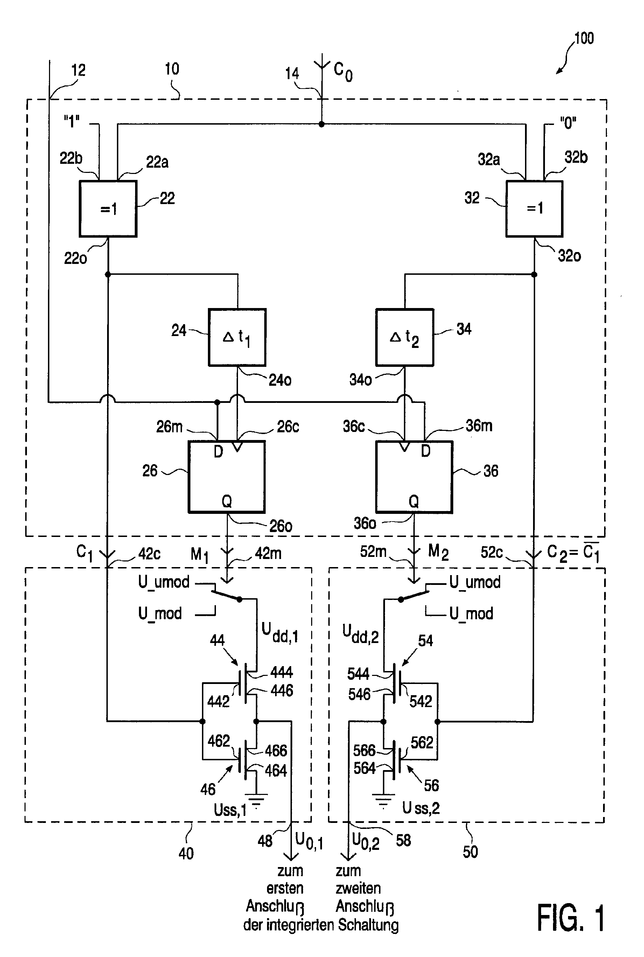

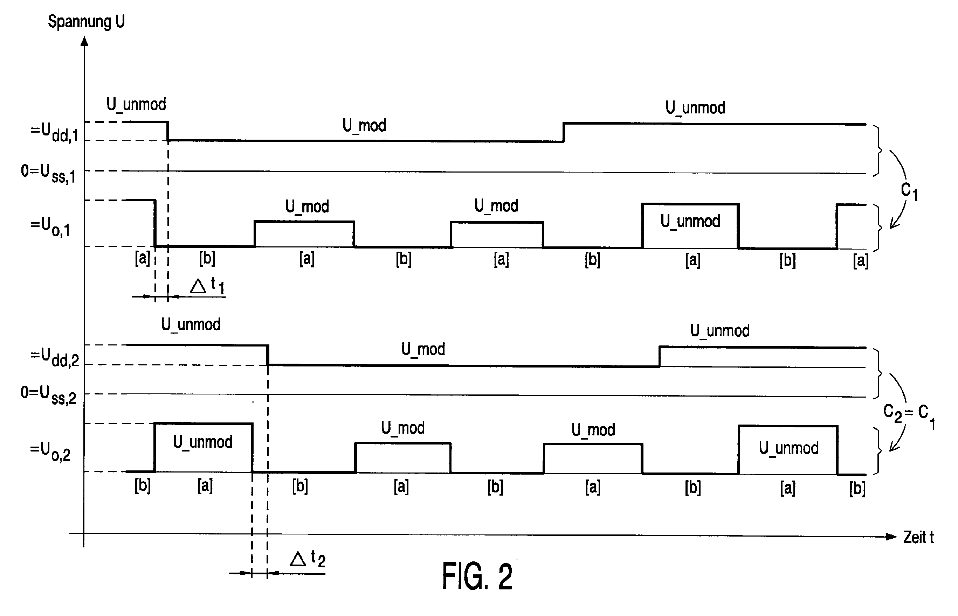

Die Schaltungsanordnung 100 ist zum Ansteuern eines (in den Figuren 1 und 2 aus Gründen der Übersichtlichkeit nicht dargsstellten) ersten Anschlusses und eines zweiten Anschlusses einer kontaktlosen integrierten Schaltung, nämlich einer CMOS-Schaltung (CMOS = complementary metal-oxide-semiconductor), vorgesehen.

Hierzu weist die Schaltungsanordnung 100 eine Steuerstufe 10 auf, deren Funktion es ist, ein beispielsweise von einer an sich bekannten Testanordnung stammendes externes Modulationssignal M₀ sowie ein ebenfalls von der Testanordnung stammendes externes Taktsignal C₀ in ein erstes Modulationssignal M₁, in ein zum ersten Modulationssignal M₁ zeitlich um etwa eine halbe Taktzeit des externen Taktsignals C₀ verschobenes zweites Modulationssignal M₂, in ein erstes Taktsignal C₁ und in ein zum ersten Taktsignal C₁ invertiertes zweites Taktsignal C₂ umzuwandeln.

Hierzu weist die Steuerstufe 10 zunächst einen für das externe Modulationssignal M₀ vorgesehenen Modulationssignaleingang 12 sowie einen für das externe Taktsignal C₀ vorgesehenen Taktsignaleingang 14 auf. Mit diesem Taktsignaleingang 14 steht ein Eingang 22a einer ersten Logikgatterschaltung 22, nämlich einer sogenannten "XOR-Schaltung" (= Exklusiv-ODER-Schaltung = Antivalenzschaltung), in Verbindung, deren anderer Eingang 22b mit einem ersten Ein-Bit-Signal (Zustand "1") beaufschlagt wird, so dass der Ausgang 22o der ersten Logikgatterschaltung 22 das erste Taktsignal C₁ abgibt.

Parallel zur ersten Logikgatterschaltung 22 steht mit dem Taktsignaleingang 14 der Eingang 32a einer zweiten Logikgatterschaltung 32, nämlich ebenfalls einer sogenannten "XOR-Schaltung" (= Exklusiv-ODER-Schaltung = Antivalenzschaltung), in Verbindung, deren anderer Eingang 32b mit einem zum ersten Ein-Bit-Signal inversen zweiten Ein-Bit-Signal (Zustand: "0") beaufschlagt wird, so dass der Ausgang 32o der zweiten Logikgatterschaltung 32 das zum ersten Taktsignal C₁ invertierte zweite Taktsignal C₂ abgibt.

Des weiteren weist die Steuerstufe 10 eine erste Verzögerungseinheit 24 auf, die mit dem Ausgang 22o der ersten Logikgatterschaltung 22 in Verbindung steht und die das erste Taktsignal C₁ um ein erstes Zdtintervall Δt₁ (vgl. Figur 1) verzögert; an diese erste Verzögerungseinheit 24 schließt sich eine erste D(elay)-Flip-Flop-Einheit 26 an, deren Takteingang 26c mit dem Ausgang 24o der eisten Verzögsrungseinheit 24 in Verbindung steht und deren D-Eingang 26m mit dem Modulationssignaleingang 12 in Verbindung steht; auf diese Weise gibt der Q-Ausgang 26o der ersten D(elay)-Flip-Flop-Einheit 26 das erste Modulationssignal M₁ ab, wobei der Q-Ausgang 26o dem Signal des D-Eingangs 26m folgt.

Parallel hierzu weist die Steuerstufe 10 eine zweite Verzögrungseinheit 34 auf, die mit dem Ausgang 32o der zweiten Logikgatterschaltung 32 in Verbindung steht und die das zweite Taktsignal C₂ um ein zweites Zeitintervall Δt₂ (vgl. Figur 1) verzögert; das erste Zeitintervall Δt₁ und das zweite Zeitintervall Δt₂ weisen in etwa gleiche zeitliche Längen auf (vgl. Figur 2), wobei die in der ersten Verzögerungseinheit 24 erzeugten ersten zeitlichen Verzögerungen Δt₁ und die in der zweiten Verzögerungseinheit 34 erzeugten zweiten zeitlichen Verzögerungen Δt₂ unter anderem jeweils mit Gatterlaufzeiten aufgebaut werden können.

An diese zweite Verzögerungseinheit 34 schließt sich eine zweite D(elay)-Flip-Rop-Einheit 36 an, deren Takteingang 36c mit dem Ausgang 34o der zweiten Verzögerungseinheit 34 in Verbindung steht und deren D-Eingang 36m mit dem Modulationssignaleingang 12 in Verbindung steht; auf diese Weise gibt der Q-Ausgang 36o der zweiten D(elay)-Flip-Flop-Einheit 36 das zweite Modulationssignal M₂ ab, wobei der Q-Ausgang 36o dem Signal des D-Eingangs 36m folgt. Das zweite Modulationssignal M₂ ist zum ersten Modulationssignal M₁ zeitlich um etwa eine halbe Taktzeit des externen Taktsignals C₀ verschoben, weil das erste Taktsignal C₁ und das zweite Taktsignal C₂ invertiert zueinander sind.

Wie aus Figur 1 des weiteren hervorgeht, weist die Schaltungsanordnung 100 eine erste Treiberstufe 40 auf, die an eine durch das erste Modulationssignal M₁ amplitudulierte erste Versorgungsspannung U_{dd,1} (vgl. Figur 2) sowie an ein erstes Referenzpotential U_{ss,1} (= Erdpotential) angeschlossen ist und die mit dem ersten Taktsignal C₁ derart beaufschlagbar ist, dass die dem ersten Anschluss der integrierten Schaltung zuführbare Ausgangsspannung U_{o,1} der ersten Treiberstufe 40 gemäß dem Takt des ersten Taktsignals C₁ zeitweise den Wert der amplitudenmodulierten ersten Versorgungsspannung U_{dd,1} und zeitweise den Wert des ersten Referenzpotentials U_{ss,1} annimmt (vgl. Figur 2).

Hierzu weist die erste Treiberstufe 40 einen für das erste Taktsignal C₁ vorgesehenen Taktsignaleingang 42c, einen für das erste Modulationssignal M₁ vorgesehenen Modulationssignaleingang 42m zum Steuern des Umschaltens der jeweiligen Modulationsspannung U_unmod bzw. U_mod auf die amplitudenmodulierte erste Versorgungsspannung U_{dd,1} (vgl. Figuren 1 und 2), einen beispielsweise als Transistor ausgebildeten ersten elektronischen Schalter 44, einen hinter den ersten Schalter 44 geschalteten, beispielsweise ebenfalls als Transistor ausabildeten zweiten elektronischen Schalter 46 und einen für das die Ausgangsspannung U_{o,1} (vgl. Figur 2) aufweisende erste Ausgangssignal vorgesehenen Ausgang 48 auf.

Generell basiert die Funktion der ersten Treiberstufe 40 in diesem Zusammenhang darauf, dass - gesteuert durch den Takt des ersten Taktsignals C₁ - jeweils einer der Schalter 44 bzw. 46 leitend wird, so dass der Ausgang 48 der ersten Treiberstufe 40 abwechselnd mit der amplitudenmodulierten ersten Versorgungsspannung U_{dd,1} (-> Modulationsspannungen U_unmod /U_mod; vgl. Figuren 1 und 2) und mit dem ersten Referenzpotential U_{ss,1} verbunden ist (vgl. Figur 2). Die in der ersten Verzögerungseinheit 24 der Steuerstufe 10 erzeugte erste zeitliche Verzögerung Δt₁ ist hierbei gerade so einzustellen, dass das Umschalten der ersten Versorgungsspannung U_{dd,1} von der Modulationsspannung U_unmod auf die Modulationsspannung U_mod stets dann erfolgt, wenn der zweite Schalter 46 der ersten Treibeistufe 40 leitend ist.

Damit nun die dem ersten Anschluss der integrierten Schaltung zuführbare Ausgangsspannung U_{o,1} der ersten Treiberstufe 40 gemäß dem Takt des ersten Taktsignals C₁ zeitweise den Wert der amplitudenmodulierten ersten Versorgungsspannung U_{dd,1} und zeitweise den Wert des ersten Referenzpotentials U_{ss,1} annimmt (vgl. Figur 2), stehen die Steuerung 442 des ersten Schalters 44 und die Steuerung 462 des zweiten Schalters 46 jeweils mit dem Taktsignaleingang 42c der ersten Treiberstufe 40 in Verbindung. Der versorgungsspannungsseitige Kontakt 444 des ersten Schalters 44 ist an die amplitudenmodulierte erste Versorgungsspannung U_{dd,1} angeschlossen, wohingegen der referenzpotentialseitige Kontakt 464 des zweiten Schalters 46 an das erste Referenzpotential U_{ss,1} angeschlossen ist; der ausgangsspannungsseitige Kontakt 446 des ersten Schalters 44 und der ausgangsspannungsseitige Kontakt 466 des zweiten Schalters 46 stehen miteinander und jeweils mit dem Ausgang 48 der ersten Treiberufe 40 in Verbindung.

Wie aus Figur 1 schließlich hervorgeht, weist die Schaltungsanordnung 100 eine komplementär zur ersten Treiberstufe 40 ausgebildete zweite Treiberstufe 50 auf, die an eine durch das zweite Modulationssignal M₂ amplitudenmodulierte zweite Versorgungsspannung U_{dd,2} (vgl. Figur 2) sowie an ein zweites Referenzpotential U_{ss,2} (= Erdpotential) angeschlossen ist und die mit dem zweiten Taktsignal C₂ derart beaufschlagbar ist, dass die dem zweiten Anschluss der integrierten Schaltung zuführbare Ausgangsspannung U_{o,2} der zweiten Treiberstufe 50 gemäß dem Takt des zweiten Taktsignals C₂ zeitweise den Wert der amplitudenmodulierten zweiten Versorgungsspannung U_{dd,2} und zeitweise den Wert des zweiten Referenzpotentials U_{ss,2} annimmt (vgl. Figur 2).

Hierzu weist die zweite Treiberstufe 50 einen für das zweite Taktsignal C₂ vorgesehenen Taktsignaleingang 52c, einen für das zweite Modulationssignal M₂ vorgesehenen Modulationssignaleingang 52m zum Steuern des Umschaltens der jeweiligen Modulationsspannung U_unmod bzw. U_mod auf die amplitudenmodulierte zweite Versorgungsspannung U_{dd,2} (vgl. Figuren 1 und 2), einen beispielsweise als Transistor ausgebildeten ersten elektronischen Schalter 54, einen hinter den ersten Schalter 54 geschalteten, beispielsweise ebenfalls als Transistor ausgebildeten zweiten elektronischen Schalter 56 und einen für das die Ausgangsspannung U_{o,2} (vgl. Figur 2) aufweisende zweite Ausgangssignal vorgesehenen Ausgang 58 auf.

Generell basiert die Funktion der zweiten Treibeistufe 50 in diesem Zusammenhang darauf, dass - gesteuert durch den Takt des zum ersten Taktsignal C₁ invertierten zweiten Taktsignals C₂ - jeweils einer der Schalter 54 bzw. 56 leitend wird, so dass der Ausgang 58 der zweiten Treiberstufe 50 abwechselnd mit der amplitudenmodulierten zweiten Versorgungsspannung U_{dd,2} (--> Modulationsspannungen U_unmod /U_mod; vgl. Figuren 1 und 2) und mit dem zweiten Referenzpotential U_{ss,2} verbunden ist (vgl. Figur 2). Die in der zweiten Verzögerungseinheit 34 der Steuerstufe 10 erzeugte zweite zeitliche Verzögerung Δt₂ ist hierbei gerade so einzustellen, dass das Umschalten der zweiten Versorgunpannung U_{dd,2} von der Modulationsspannung U_unmod auf die Modulationsspannung U_mod stets dann erfolgt, wenn der zweite Schalter 56 der zweiten Treiberstufe 50 leitend ist.

Damit nun die dem zweiten Anschluss der integrierten Schaltung zuführbare Ausgangsspannung U_{o,2} der zweiten Treiberstufe 50 gemäß dem Takt des zweiten Taktsignals C₂ zeitweise den Wert der amplitudenmodulierten zweiten Versorgungsspannung U_{dd,2} und zeitweise den Wert des zweiten Referenzpotentials U_{ss,2} annimmt (vgl. Figur 2), stehen die Steuerung 542 des ersten Schalters 54 und die Steuerung 562 des zweiten Schalters 56 jeweils mit dem Taktsignaleingang 52c der zweiten Treiberstufe 50 in Verbindung Der versorgungsspannungsseitige Kontakt 544 des ersten Schalters 54 ist an die amplitudenmodulierte zweite Versorgungsspannung U_{dd,2} angeschlossen, wohingegen der referenzpotentialseitige Kontakt 564 des zweiten Schalters 56 an das zweite Referenzpotential U_{ss,2} angeschlossen ist; der ausgangsspannungsseitige Kontakt 546 des ersten Schalters 54 und der ausgangsspannungsseitige Kontakt 566 des zweiten Schalters 56 stehen miteinander und jeweils mit dem Ausgang 58 der zweiten Treiberstufe 50 in Verbindung

Hierbei ist in bezug auf das anhand der Figuren 1 und 2 veranschaulichte Ausführungsbeispiel der Schaltungsanordnung 100 von erfindungswesentlicher Bedeutung, dass die Amplitudenmodulation über die Umschaltung der jeweiligen Versorgungsspannung U_{dd,1} bzw. U_{dd,2} der beiden Treiberstufen 40 bzw. 50 erfolgt, wobei die Versorgungsspannungen U_{dd,1} bzw. U_{dd,2} der beiden Treiberstufen 40 bzw. 50 zu unterschiedlichen Zeitpunkten umgeschaltet werden, weil das erste Zeitintervall Δt₁ und das zweite Zeitintervall Δt₂ in etwa gleiche zeitliche Längen aufweisen. Hierzu werden die beiden Treiberstufen 40 bzw. 50 mit den zueinander invertierten, aber symmetrischen Taktsignalen C₁ bzw. C₂ beaufschlagt, so dass am Ausgang 48 bzw. 58 der Treibelstufen 40 bzw. 50 jeweils zwei gleichlange Taktphasen [a] und [b] (vgl. Figur 2) entstehen:
In Taktphase [a] (vgl. Figur 2) ist der jeweilige erste Schalter 44 bzw. 54 leitend, und der jeweilige zweite Schalter 46 bzw. 56 sperrt, so dass die jeweilige Versorgungsspannung U_{dd,1} bzw. U_{dd,2} mit dem jeweiligen Ausgang 48 bzw. 58 der jeweiligen Treiberstufe 40 bzw. 50 verbunden ist; in Taktphase [b] (vgl. Figur 2) sperrt der jeweilige erste Schalter 44 bzw. 54, und der jewilige zweite Schalter 46 bzw. 56 ist leitend, so dass das jewilige Referenzpotential U_{ss,1} bzw. U_{ss,2} mit dem jeweiligen Ausgang 48 bzw. 58 der jeweiligen Treiberstufe 40 bzw. 50 verbunden ist.
Wie Figur 2 zu entnehmen ist, ist die in der ersten Verzögerungseinheit 24 erzeugte erste zeitliche Verzögerung Δt₁ und die in der zweiten Verzögerungseinheit 34 erzeugte zweite zeitliche Verzögerung Δt₂ jeweils so zu wählen, dass das erste Modulationssignal M₁ bzw. das zweite Modulationssignal M₂ die jeweilige Versorgungsspannung U_{dd,1} bzw. U_{dd,2} der beiden Treiberstufen 40 bzw. 50 jeweils gesichert in Taktphase [b] umschaltet (vgl. Figur 2), in der die jeweilige Versorgungsspannung U_{dd,1} bzw. U_{dd,2} nicht mit dem jeweiligen Ausgang 48 bzw. 58 der jeweiligen Treiberstufe 40 bzw. 50 verbunden ist. Da die beiden Treiberstufen 40 bzw. 50 mit zueinander invertierten Taktsignalen C₁ bzw. C₂ arbeiten, ist der jeweilige Zeitpunkt der Umschaltung für die beiden Treiberstufen 40 bzw. 50 hierbei unterschiedlich (vgl. Figur 2).

### BEZUGSZEICHENLISTE

- 100: Schaltungsanordnung
- 10: Steuerstufe
- 12: Modulationssignaleingang der Steuerstufe 10
- 14: Taktsignaleingang der Steuerstufe 10
- 22: erste Logikgatterschaltung (= Exklusiv-ODER-Schaltung)
- 22a: ein Eingang der ersten Logikgatterschaltung 22
- 22b: anderer Eingang der ersten Logikgatterschaltung 22
- 22o: Ausgang der ersten Logikgatterschaltung 22
- 24: erste Veisögerungseinheit
- 24o: Ausgang der ersten Verzögerungseinheit 24
- 26: erste D(elay)-Flip-Flop-Einheit
- 26c: Takteingang der ersten D(elay)-Flip-Flop-Einheit 26
- 26m: D-Eingang der ersten D(elay)-Flip-Flop-Einheit 26
- 26o: Q-Ausgang der ersten D(elay)-Flip-Flop-Einheit 26
- 32: zweite Logikgatterschaltung (= Exklusiv-ODER-Schaltung)
- 32a: ein Eingang der zweiten Logikgatterschaltung 32
- 32b: anderer Eingang der zweiten Logikgatterschaltung 32
- 32o: Ausgang der zweiten Logikgatterschaltung 32
- 34: zweite Verzögerungseinheit
- 34o: Ausgang der zweiten Verzögerungseinheit 34
- 36: zweite D(elay)-Flip-Rop-Einheit
- 36c: Takteingang der zweiten D(elay)-Flip-Flop-Einheit 36
- 36m: D-Eingang der zweiten D(elay)-Flip-Flop-Einheit 36
- 36o: Q-Ausgang der zweiten D(elay)-Flip-Flop-Einheit 36
- 40: erste Treiberstufe
- 42c: Taktsignaleingang der ersten Treiberstufe 40
- 42m: Modulationssignaleingang der ersten Treiberstufe 40
- 44: erster elektronischer Schalter der ersten Treiberstufe 40
- 442: Steuerung des ersten Schalters 44
- 444: versorgungsspannungsseitiger Kontakt des ersten Schalters 44
- 446: ausgangsspannungsseitiger Kontakt des ersten Schalters 44
- 46: zweiter elektronischer Schalter der ersten Treiberstufe 40
- 462: Steuerung des zweiten Schalters 46
- 464: referenzpotentialseitiger Kontakt des zweiten Schalters 46
- 466: ausgangsspannungsseitiger Kontakt des zweiten Schalters 46
- 48: Ausgang der ersten Treiberstufe 40
- 50: zweite Treibeistufe
- 52c: Taktsignaleingang der zweiten Treiberstufe 50
- 52m: Modulationssignaleingang der zweiten Treiberstufe 50
- 54: erster elektronischer Schalter der zweiten Treiberstufe 50
- 542: Steuerung des ersten Schalters 54
- 544: vesorgungsspannungsseitiger Kontakt des ersten Schalters 54
- 546: ausgangsspannungsseitiger Kontakt des ersten Schalters 54
- 56: zweiter elektronischer Schalter der zweiten Treiberstufe 50
- 562: Steuerung des zweiten Schalters 56
- 564: referenzpotentialseitiger Kontakt des zweiten Schalters 56
- 566: ausgangsspannungsseitiger Kontakt des zweiten Schalters 56
- 58: Ausgang der zweiten Treiberstufe 50
- C₀: externes Taktsignal
- C₁: erstes Taktsignal
- C₂: zum ersten Taktsignal C₁ invertiertes zweites Taktsignal
- M₀: externes Modulationssignal
- M₁: erstes Modulationssignal
- M₂: zum ersten Modulationssignal M₁ zeitlich verschobenes zweites Modulationssignal
- Δt₁: erstes Zeitintervall
- Δt₂: vom ersten Zeitintervall Δt₁ verschiedenes zweites Zeitintervall
- U_(un)mod: jeweilige Modulationsspannung
- U_{dd,1}: amplitudenmodulierte erste Versorgungsspannung
- U_{dd,2}: amplitudenmodulierte zweite Versorgungsspannung
- U_{o,1}: Ausgangsspannung der ersten Treiberstufe 40
- U_{o,2}: Ausgangsspannung der zweiten Treiberstufe 50
- U_{ss,1}: erstes Referenzpotential
- U_{ss,2}: zweites Referenzpotential

## Patentansprüche

1. Schaltungsanordnung zum Ansteuern eines ersten Anschlusses und eines zweiten Anschlusses einer vorzugsweise kontaktlosen integrierten Schaltung, insbesondere zum Testen einer CMOS-Schaltung,
**dadurch gekennzeichnet,**
**dass** die Schaltungsanordnung (100) aufweist:
- mindestens eine Steuerstufe (10), die aus einem externen Modulationssignal (M₀) und aus einem externen Taktsignal (C₀)
-- ein erstes Modulationssignal (M₁);
-- ein zum ersten Modulationssignal (M₁) zeitlich verschobenes zweites Modulationssignal (M₂);
-- ein vorzugsweise symmetrisches erstes Taktsignal (C₁); und
-- ein zum ersten Taktsignal (C₁) invertiertes, vorzugsweise symmetrisches zweites Taktsignal (C₂)
generiert;
- mindestens eine erste Treiberstufe (40),
-- die an eine durch das erste Modulationssignal (M₁) amplitudenmodulierte erste Versorgungsspannung (U_{dd,1}) und an ein erstes Referenzpotential (U_{ss,1}) angeschlossen ist und
-- die mit dem ersten Taktsignal (C₁) derart beaufschlagbar ist, dass die dem ersten Anschluss der integrierten Schaltung zuführbare Ausgangaspannung (U_{o,1}) der ersten Treiberstufe (40) gemäß dem Takt des ersten Taktsignals (C₁) zeitweise den Wert der amplitudenmodulierten ersten Versorgungsspannung (U_{dd,1}) und zeitweise den Wert des ersten Referenzpotentials (U_{ss,1}) annimmt; und
- mindestens eine zwite Treiberstufe (50),
-- die an eine durch das zweite Modulationssignal (M₂) amplitudenmodulierte zweite Versorgungsspannung (U_{dd,2}) und an ein zweites Referenzpotential (U_{ss,2}) angeschlossen ist und
-- die mit dem zweiten Taktsignal (C₂) derart beaufschlagbar ist, dass die dem zweiten Anschluss der integrierten Schaltung zuführbare Ausgangsspannung (U_{o,2}) der zweiten Treiberstufe (50) gemäß dem Takt des zweiten Taktsignals (C₂) zeitweise den Wert der amplitudenmodulierten zweiten Versorgungsspannung (U_{dd,2}) und zeitweise den Wert des zweiten Referenzpotentials (U_{ss,2}) annimmt.

2. Schaltungsanordnung gemäß Anspruch 1,
**dadurch gekennzeichnet,**
**dass** die Steuerstufe (10) aufweist:
- einen für das externe Modulationssignal (M₀) vorgesehenen Modulationssignaleingang (12);
- einen für das externe Taktsignal (C₀) vorgesehenen Taktsignaleingang (14);
- eine mit dem Taktsignaleingang (14) in Verbindung stehende erste Logikgatterschaltung, insbesondere Exklusiv-ODER-Schaltung, (22), deren Ausgang (22o) das erste Taktsignal (C₁) abgibt;
- eine mit dem Taktsignaleingang (14) in Verbindung stehende, zur ersten Logikgatterschaltung (22) parallel geschaltete zweite Logikgatterschaltung, insbesondere Exklusiv-ODER-Schaltung, (32), deren Ausgang (32o) das zum ersten Taktsignal (C₁) invertierte zweite Taktsignal (C₂) abgibt;
- eine mit dem Ausgang (22o) der ersten Logikgarteischaltung (22) in Verbindung stehende erste Verzögerungseinheit (24), die das erste Taktsignal (C₁) um ein erstes Zeitintervall (Δt₁) verzögert;
- eine mit dem Ausgang (32o) der zweiten Logikgatterschaltung (32) in Verbindung stehende zwite Verzögerungseinheit (34), die das zweite Taktsignal (C₂) um ein zweites Zeitintervall (Δt₂) verzögert;
- eine erste D(elay)-Flip-Flop-Einheit (26),
-- deren Takteingang (26c) mit dem Ausgang (24o) der ersten Verzögerungseinheit (24) in Verbindung steht;
-- deren D-Eingang (26m) mit dem Modulationssignaleingang (12) in Verbindung steht; und
-- deren Q-Ausgang (26o) das erste Modulationssignal (M₁) abgibt; und
- eine zweite D(elay)-Flip-Flop-Einheit (36),
-- deren Takteingang (36c) mit dem Ausgang (34o) der zweiten Verzögerungseinheit (34) in Verbindung steht;
-- deren D-Eingang (36m) mit dem Modulationssignaleingang (12) in Verbindung steht; und
-- deren Q-Ausgang (36o) das zum ersten Modulationssignal (M₁) zeitlich verschobene zweite Modulationssignal (M₂) abgibt.

3. Schaltungsanordnung gemäß Anspruch 2,
**dadurch gekennzeichnet,**
**dass** die in der ersten Verzögerungseinheit (24) erzeugte erste zeitliche Verzögerung (Δt₁) und die in der zweiten Verzögerungseinheit (34) erzeugte zweite zeitliche Verzögerung (Δt₂) in etwa gleiche zeitliche Längen aufweisen.

4. Schaltungsanordnung gemäß Anspruch 2 oder 3,
**dadurch gekennzeichnet,**
**dass** die in der ersten Verzögerungseinheit (24) erzeugten ersten zeitlichen Verzögerungen (Δt₁) und/oder die in der zweiten Verzögerungseinheit (34) erzeugten zweiten zeitlichen Verzögerungen (Δt₂) jeweils mit Gatterlaufzeiten aufbaubar sind.

5. Schaltungsanordnung gemäß mindestens einem der Ansprüche 1 bis 4,
**dadurch gekennzeichnet,**
**dass** das zweite Modulationssignal (M₂) zum ersten Modulationssignal (M₁) zeitlich um etwa eine halbe Taktzeit des externen Taktsignals (C₀) verschoben ist.

6. Schaltungsanordnung gemäß mindestens einem der Ansprüche 1 bis 5,
**dadurch gekennzeichnet,**
- **dass** die erste Treiberstufe (40) aufweist:
-- einen für das erste Taktsignal (C₁) vorgesehenen Taktsignaleingang (42c);
-- einen für das erste Modulationssignal (M₁) vorgesehenen Modulationssignaleingang (42m) zum Steuern des Umschaltens der jeweiligen Modulationsspannung (U_unmod bzw. U_mod) auf die amplitudenmodulierte erste Versorgungsspannung (U_{dd,1});
-- einen ersten elektronischen Schalter (44);
-- einen hinter den ersten Schalter (44) geschalteten zweiten elektronischen Schalter (46); und
-- einen für das die Ausgangsspannung (U_{o,1}) aufweisende erste Ausgangssignal vorgesehenen Ausgang (48),
--- wobei die Steuerung (442) des ersten Schalters (44) und die Steuerung (462) des zweiten Schalters (46) jeweils mit dem Taktsignaleingang (42c) in Verbindung stehen,
--- wobei der versorgungsspannungsseitige Kontakt (444) des ersten Schalters (44) an die amplitudenmodulierte erste Versorgungsspannung (U_{dd,1}) angeschlossen ist,
--- wobei der referenzpotentialseitige Kontakt (464) des zweiten Schalters (46) an das erste Referenzpotential (U_{ss,1}) angeschlossen ist und
--- wobei der ausgangsspannungsseitige Kontakt (446) des ersten Schalters (44) und der ausgangsspannungsseitige Kontakt (466) des zweiten Schalters (46) miteinander und jeweils mit dem Ausgang (48) in Verbindung stehen, und
- dass die zweite Treiberstufe (50) aufweist:
-- einen für das zweite Taktsignal (C₂) vorgesehenen Taktsignaleingang (52c);
-- einen für das zweite Modulationssignal (M₂) vorgesehenen Modulationssignaleingang (52m) zum Steuern des Umschaltens der jeweiligen Modulationsspannung (U_unmod bzw. U_mod) auf die amplitudenmodulierte zweite Versorgungsspannung (U_{dd,2});
-- einen ersten elektronischen Schalter (54);
-- einen hinter den ersten Schalter (54) geschalteten zweiten elektronischen Schalter (56); und
-- einen für das die Ausgangsspannung (U_{o,2}) aufweisende zweite Ausgangssignal vorgesehenen Ausgang (58),
--- wobei die Steuerung (542) des ersten Schalters (54) und die Steuerung (562) des zweiten Schalters (56) jeweils mit dem Taktsignaleingang (52c) in Verbindung stehen,
--- wobei der versorgungsspannungsseitige Kontakt (544) des ersten Schalters (54) an die amplitudenmodulierte zweite Versorgungsspannung (U_{dd,2}) angeschlossen ist,
--- wobei der referenzpotentialseitige Kontakt (564) des zweiten Schalters (56) an das zweite Referenzpotential (U_{ss,2}) angeschlossen ist und
--- wobei der ausgangsspannungsseitige Kontakt (546) des ersten Schalters (54) und der ausgangsspannungsseitige Kontakt (566) des zweiten Schalters (56) miteinander und jeweils mit dem Ausgang (58) in Verbindung stehen.

7. Schaltungsanordnung gemäß Anspruch 6,
**dadurch gekennzeichnet,**
**dass** der jeweilige erste elektronische Schalter (44; 54) und/oder dass der jeweilige zweite elektronische Schalter (46; 56) als Transistor ausgebildet ist.

8. Schaltungsanordnung gemäß mindestens einem der Ansprüche 1 bis 7,
**dadurch gekennzeichnet,**
**dass** die erste Treiberstufe (40) und die zweite Treiberstufe (50) komplementär zueinander ausgebildet sind.

9. Schaltungsanordnung gemäß mindestens einem der Ansprüche 1 bis 8,
**dadurch gekennzeichnet,**
**dass** die erste Versorgungsspannung (U_{dd,1}) und die zweite Versorgungsspannung (U_{dd,2}) unterschiedlich groß sind.

10. Schaltungsanordnung gemäß mindestens einem der Ansprüche 1 bis 9,
**dadurch gekennzeichnet,**
**dass** das erste Referenzpotential (U_{ss,1}) und das zweite Referenzpotential (U_{ss,2}) zumindest in etwa gleich groß sind.

11. Schaltungsanordnung gemäß mindestens einem der Ansprüche 1 bis 10,
**dadurch gekennzeichnet,**
**dass** das erste Referenzpotential (U_{ss,1}) und/oder das zweite Referenzpotential (U_{ss,2}) das Erdpotential oder das Massepotential sind

12. Vorzugsweise kontaktlose integrierte Schaltung, insbesondere CMOS-Schaltung, angesteuert, insbesondere getestet durch mindestens eine Schaltungsanordnung (100) gemäß mindestens einem der Ansprüche 1 bis 11.

13. Integrierte Schaltung gemäß Anspruch 12,
**dadurch gekennzeichnet,**
**dass** die integrierte Schaltung auf einer Platte oder Scheibe ("wafer") eines Trägersubstrats aus halbleitendem oder isolierendem Material angeordnet ist.
